# EUROPEAN PATENT APPLICATION

(11) **EP 4 209 941 A1**
(43) Date of publication of application: **12.07.2023**
(21) Application number: 22214101.2
(22) Date of filing: 16.12.2022
(51) Int. Cl.: G06F 21/31, G06F 21/32, G06N 3/08, G06V 40/40

(54) **METHOD AND SYSTEM OF PREDICTIVE DOCUMENT VERIFICATION AND MACHINE LEARNING THEREFOR**

(30) Priority: 06.01.2022 US 202217569976
(71) Applicant: Socure Inc., New York NY 10001 (US)
(72) Inventor: ABREU, Pablo Ysrrael, New York (US); XIAO, Feng, New York (US); LI, Yaguang, New York (US); HUA, Yiwen, New York (US)
(74) Representative: Colonna, Matthew Oliver

(57) **Abstract**

Provided are methodology and system countering fraudulent document and/or image use when authentication of a transaction based on a given document or image use is required. Additionally provided is a manner of machine learning adapting the methodology for implementation thereof.

## Description

### FIELD OF THE DISCLOSURE

Disclosed embodiments relate to identity verification for authenticating a transaction for which the verification is required, and more specifically, to one or more manner for detecting subject imitation in connection with presentation of an image and/or a document for the subject which, together with machine learning therefor, optimizes a probability for veracity of the detection.

### BACKGROUND

Individuals in today's society are often required to show proof of identity when attempting a particular transaction such as, for example, seeking employment, obtaining financial credit, and purchasing age-restricted goods, such as alcohol and tobacco. A typical and widely accepted form of such proof is a government-issued form of identification ("ID"), whether a driver's license (DL) or a passport. This is the case as such an ID is known to include a picture of the individual (hereinafter "the presenter") and other personally identifiable information (PII) by which the presenter may be verified as against their personal appearance or a secondary form of ID. The PII ordinarily provides an employer, a financial institution, and a retailer, for instance (and hereinafter a "requester"), an opportunity to compare the personal appearance, the picture and the PII so as to ascertain the veracity of the information expressed by the ID. As is understood, the PII many times includes items such as name, social security number or other randomly generated number, place of residence, date of birth (DOB), date of issuance, and national origin for the presenter. Accordingly, the combination of the picture and the PII, together with various other features including security features, document construction, and encoded material, define an expression for the document (hereinafter "Document Expression") in which relevant portions thereof ought to match the personal appearance and, as applicable, the secondary form of the ID, depending on whether it also includes a picture of the presenter or solely PII.

As is well understood, circumstances may exist such that the presenter is prohibited from obtaining one or more of the DL or passport discussed above. The circumstances may be static, e.g., the presenter is not of age, or dynamic, e.g., the presenter has engaged in certain illegal activity which denies an ability to obtain a given ID. No matter the reason, it is sometimes the case that the presenter resorts to forgery of the ID, through some manipulation of one or more of the picture, the ID document construction itself and the PII, in order to satisfy the ID requirements of the requester. In attempting to do so, it is often plainly the case that the presenter is engaged in an attempt to impersonate another's identity or simply fabricating an ID in an effort to succeed in perpetrating fraudulent activity, e.g., financial fraud.

Thus, it would be advantageous to thwart attempts by a presenter to dupe a requester through the use of such forged documents. More specifically, it would be desirable to do so by providing the requester a forecast of the likelihood that a transaction involving the presented ID (hereinafter "the presented document") is or is not fraudulent. Further, it would also be advantageous to evaluate the authenticity of the transaction with respect to any self-taken photograph ("selfie") that may be used by a presenter when attempting to substantiate his or her identity.

### SUMMARY

It is to be understood that both the following summary and the detailed description are exemplary and explanatory and are intended to provide further explanation of the present invention as claimed. Neither the summary nor the description that follows is intended to define or limit the scope of the present invention to the particular features mentioned in the summary or in the description. Rather, the scope of the present invention is defined by the appended claims.

An embodiment may include a method of verifying an identity of an individual for authenticating a transaction, the method including receiving, as offered proof of identity of the individual for the transaction, a selfie of the individual and/or a document expression for a presented document of the individual, the document expression comprising an image of the presented document which comprises at least a headshot of the individual and identity information of the individual comprising personally identifiable information (PII) comprising at least a name and a date of birth (DOB), determining, by an identity verifier (IV), an evaluation of fraudulent usage for (a) the selfie of the individual and/or (b) the document expression by at least cross-checking the document expression against a known standard for the presented document to evaluate compliance with the standard, converting the evaluation into an input for a machine learning model comprising an identity verification predictor (IVP), and applying the input to the IVP and in response obtaining, as output from the IVP, an authentication result for the transaction defining a probability that the transaction is fraudulent and one or more reasons therefor.

A further respective embodiments may include a relative system commensurate with the embodied method above.

In certain embodiments, the disclosed embodiments may include one or more of the features described herein.

### BRIEF DESCRIPTION OF THE DRAWINGS

**FIG. 1** illustrates elements of an identity verification engine (IVE) in association with various components with which it is configured to communicate in order to verify the authenticity of a presented document and/or stand-alone image, according to embodiments herein;
**FIG. 2** illustrates various input derived by an identity verifier (IV) of the IVE, and which is fed to an identity verification predictor (IVP) of the IVE, according to embodiments herein;
**FIG. 3** is a flow chart describing various operations of the IV when examining a presented document and as against a self-taken photograph (selfie) of a presenter, according to embodiments herein;
**FIG. 4** is a flow chart describing an inflow of the input of **FIG. 2****,** together with secondary input, which is to be fed to the IVP, according to embodiments herein;
**FIGS. 5A** and **5B** show flow charts describing a process for respectively training and applying machine learning operations according to the IVP, and **FIGS. 5C** **and** **5D** show flow charts describing a process conducted by the IVP which yields an authentication result for the presented document and/or stand-alone image, together with a manner of subsequently tuning the operations of **FIGS. 3** and **4** for a subsequent iteration of authentication, according to embodiments herein;
**FIG. 6** illustrates an exemplary transactional record for a given transaction for which an authentication result was requested; and
**FIGS. 7A-7D** show various example analyses performed by the IV in connection with a presented document and a selfie, as applicable and according to embodiments herein.

### DETAILED DESCRIPTION

The present disclosure will now be described in terms of various exemplary embodiments. This specification discloses one or more embodiments that incorporate features of the present embodiments. The embodiment(s) described, and references in the specification to "one embodiment", "an embodiment", "an example embodiment", etc., indicate that the embodiment(s) described may include a particular feature, structure, or characteristic. Such phrases are not necessarily referring to the same embodiment. The skilled artisan will appreciate that a particular feature, structure, or characteristic described in connection with one embodiment is not necessarily limited to that embodiment but typically has relevance and applicability to one or more other embodiments.

In the several figures, like reference numerals may be used for like elements having like functions even in different drawings. The embodiments described, and their detailed construction and elements, are merely provided to assist in a comprehensive understanding of the present embodiments. Thus, it is apparent that the present embodiments can be carried out in a variety of ways, and does not require any of the specific features described herein. Also, well-known functions or constructions are not described in detail since they would obscure the present embodiments with unnecessary detail.

The description is not to be taken in a limiting sense, but is made merely for the purpose of illustrating the general principles of the present embodiments, since the scope of the present embodiments are best defined by the appended claims.

It should also be noted that in some alternative implementations, the blocks in a flowchart, the communications in a sequence-diagram, the states in a state-diagram, etc., may occur out of the orders illustrated in the figures. That is, the illustrated orders of the blocks/communications/states are not intended to be limiting. Rather, the illustrated blocks/communications/states may be reordered into any suitable order, and some of the blocks/communications/states could occur simultaneously.

All definitions, as defined and used herein, should be understood to control over dictionary definitions, definitions in documents incorporated by reference, and/or ordinary meanings of the defined terms.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of or "exactly one of," or, when used in the claims, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of' "Consisting essentially of," when used in the claims, shall have its ordinary meaning as used in the field of patent law.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of example embodiments. As used herein, the term "and/or" includes any and all combinations of one or more of the associated listed items. As used herein, the singular forms "a", "an" and "the" are intended to include the plural forms as well, unless the context clearly indicates otherwise.

The word "exemplary" is used herein to mean "serving as an example, instance, or illustration." Any embodiment described herein as "exemplary" is not necessarily to be construed as preferred or advantageous over other embodiments. Additionally, all embodiments described herein should be considered exemplary unless otherwise stated.

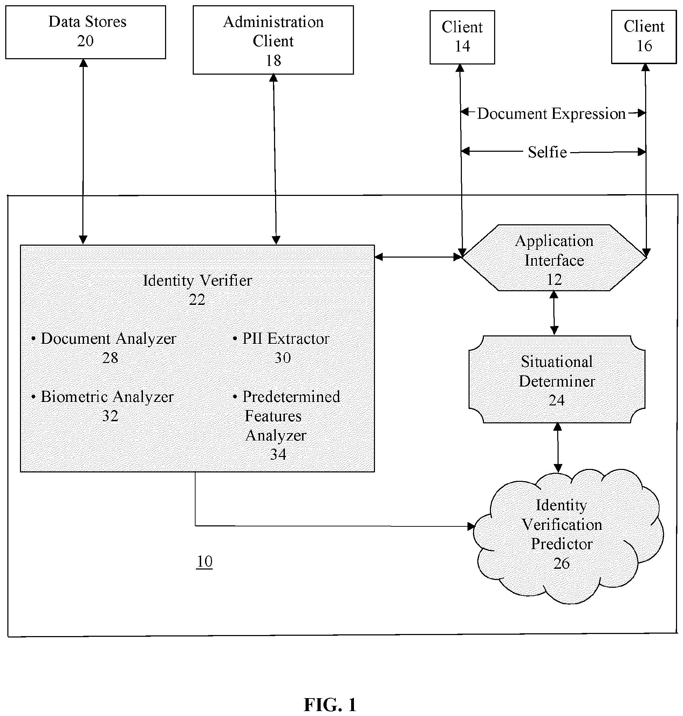

Referring to FIG. 1, there is shown an Identity Verification Engine (IVE) 10 and other to be described components configured for wireless communication with the IVE 10, according to one or more embodiments described herein. In one embodiment, IVE 10 resides on a single cloud based server although it is also possible for various components of IVE 10 (as described herein) to reside on separate servers. By way of example, IVE 10 may be a computer implemented application which resides on a computing server. Accordingly, it is to be understood that IVE 10 may be equipped with all of the necessary hardware and/or software necessary for generating and issuing an authentication result thereof, as described herein.

IVE 10 may reside on one or more physical servers. These servers may include electronic storage, one or more processors, and/or other components for processing various computer-implemented instructions. The servers may also include communication lines, or ports to enable the exchange of information with a network and/or other computing platforms. The servers may include a plurality of hardware, software, and/or firmware components operating together to provide the functionality attributed herein to IVE 10.

Electronic storage associated with the servers may comprise non-transitory storage media that electronically store information. The electronic storage media of electronic storage may include one or both of system storage that is provided integrally (i.e., substantially non-removable) with servers and/or removable storage that is removably connectable to the servers via, for example, a port or a drive.

Electronic storage may include one or more of optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media. Electronic storage may include one or more virtual storage resources (e.g., cloud storage, a virtual private network, and/or other virtual storage resources). Electronic storage may store software algorithms, information determined by processors, information received from servers, information received from one or more entities, and/or other information that enables the servers to function as described herein.

While an exemplary architecture is described above, it will readily be understood by one of skill in the art, that an unlimited number of architectures and computing environments are possible while still remaining within the scope and spirit of embodiments herein.

IVE 10 may operate to generate an authentication result for the presented document based on a received authenticity request from a requester to render a determination as to whether a presented document from a presenter is authentic or fraudulent, i.e., forged in some manner, in connection with a transaction which is to be authenticated and whereas the term "transaction" may include one or more of its preliminary, intermediate, and final processing stages. Additionally, IVE 10 may operate to generate an authentication result for a presented selfie that may or may not be used in conjunction with the presented document to verify the identity of the presenter. Such an authenticity request may be originated from, for example, requesters who have transmitted the selfie of the presenter that is to analyzed in its stand-alone capacity and/or compared with likewise transmitted and imaged front and back sides of the presented document, e.g., a driver's license (DL). Alternatively, the selfie may be compared with the information page included in a passport issued by a governmental agency. IVE 10 may be accessed through the internet or any other private or public network by one or more requesters so as to enable a given requester to transmit the Document Expression of the presented document and the selfie for receipt by the IVE 10 so that it may execute their individual analyses and side-by-side comparison. In these regards, the terms "verify," and "verification" mean determining the presenter's identity as being a true identity for the presenter in response to an initial authentication request from a respective requester. In this respect, the terms "verify, "verification," and authentication result, as used herein, shall be interpreted according to their commonly accepted meanings. Further, and with respect to a second authentication request from the aforementioned requester for the same presenter, the terms "verify" and "verification," when applied to a second authentication request for that same presenter according to the initial authentication request, shall be understood as meaning, respectively, "authenticate" and "authentication," relative to the fact that the presenter's identity had already been a subject of inquiry.

Each of requesters may be in use of clients 14 and/or 16 such as personal computers, laptops, handheld computing devices such as smartphones or tablets or any other device capable of providing the required connectivity and display. In some embodiments, a client 14 or 16 may be a computing application operated by a customer which requires document verification to process transaction requests. For example, a client 14 or 16 may be an application or set of applications operated by a financial institution which processes requests for new credit lines made by customers of that financial institution.

Clients 14 and/or 16 may interact with IVE 10 such that data may be communicated between them via an application interface 12 and such that IVE 10 may process authenticity requests made by clients 14 and/or 16 on behalf of their respective requester, based on, e.g., transmitted images including the selfie and that of the Document Expression. Application interface 12 may comprise one or more application programming interfaces (APIs) that permit applications associated with a client 14 and/or 16 to communicate with IVE 10.

Also shown in FIG. 1 is Administration Client 18. Administration Client 18 may comprise any one of individual personal computers, laptops, handheld computing devices, such as smartphones or tablets, or any other similar device. Administration Client 18 may be operative to allow users to configure, maintain and support the operation of IVE 10. For example, a user may use Administration Client 18 to interact with IVE 10 to set parameters regarding what is required to ascertain an authentication result.

Data Stores 20 may also be present according to embodiments herein. Data Stores 20 may comprise one or more external databases, data sets, systems, applications, rules bases and/or other sources of data which is used by IVE 10 to generate the authentication result. By way of example, Data Stores 20 may comprise publicly available government informational databases, credit reporting databases, demographic databases, databases including reported and known fraud data, e.g., images and/or PII, databases including financial transaction data, as well as other sources of data useful to IVE 10 in generating accurate authentication results according to embodiments herein. Also, the term "Data Stores 20" may refer to one more databases internal to an operator of the IVE 10, such that access thereto may be unlimited in one or more respects.

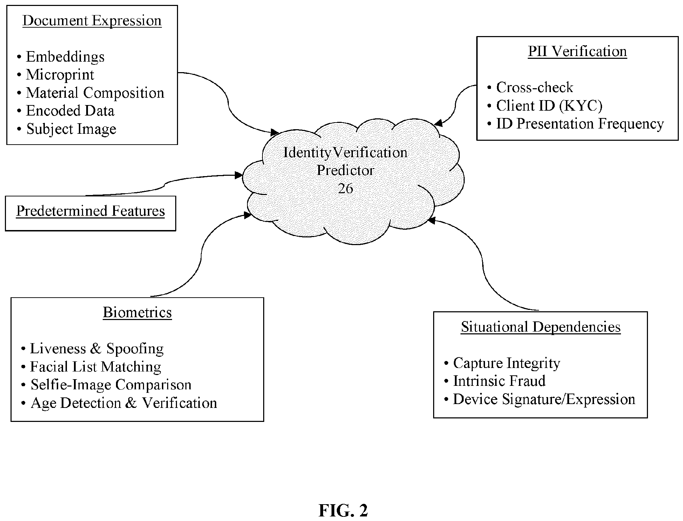

In still referring to FIG. 1, IVE 10 may include an Identity Verifier (IV) 22, a Situational Determiner (SD) 24, and an Identity Verification Predictor (IVP) 26, as generally discussed below and in more detail with respect to FIG. 2. Each of the aforementioned may be implemented as one or more computer-readable instructions or set(s) of instructions. IVE 10 may likewise include the Application Interface 12.

IV 22 may include a Document Analyzer 28 to assess various aspects of the Document Expression and to extract, via a personally identifiable information (PII) Extractor 30, various PII, such as name, social security number or other randomly generated number, place of residence, date of birth (DOB), date of issuance, and national origin for the presenter, which may be the basis for comparison as is discussed below.

As a means to generate the authentication result and to comport with client, i.e., requestor, issued requests to verify the identity of the presenter as is included in the presented document, IV 22 may also include a Biometric Analyzer 32 so as to be enabled to compare, for example, a selfie of the presenter as against an image thereof as defined by the Document Expression of the presented document, and hereinafter referred to as a "headshot." Other aspects and functionality of the Biometric Analyzer 32 are discussed below.

In order to enhance the robustness of the IV 22, the same may be configured to incorporate a Predetermined Features Analyzer 34 for implementing one or more predetermined features and/or techniques that may be employed to otherwise examine authenticity of the selfie and/or the presented document. For example, the Predetermined Features Analyzer 34 may assess and determine scoring as to, for example, any of the liveness of the selfie as against a stored model, i.e., optimal, liveness score therefor and/or an imaged quality of the selfie as against a stored model imaging score. Further, the Predetermined Features Analyzer 34 may assess and determine scoring as against a stored model score with respect to material composition and patterning for a presented document, as well as comparability between the selfie and the headshot provided by the Document Expression. In other words, model scoring hereinabove and for one or more other features as may be evaluated by IV 22 may be predetermined so as to provide a basis for evaluation of the particular feature(s) being assessed.

SD 24 may endow IVE 10 with an ability to evaluate various situational dependencies, i.e., aspects that are inherently defined by an appearance of the selfie capture itself, an appearance of the headshot and/or the selfie and/or the device used to capture the selfie. With respect to the headshot and/or the selfie capture, one such dependency may be defined by elements of, for example, distortions such as blur and/or excessive or insufficient brightness, though such elements are not exhaustive of those that may be examined from the selfie. For instance, a level of contrast, either separately from or together with the discussed blur and/or brightness may be assessed across multiple databases when the headshot and/or selfie is searched from among resources of Data Stores 20.

Another situational dependency may comprise fraudulent image use on the presented document and/or manipulation of the selfie, as based on correlation with Data Stores 20, for example. That is, if an actual image of the presenter ought to be defined by physical characteristics such as the absence or presence of distinguishing physical traits, then the converse may indicate fraudulent image use. In this regard, and for purposes of illustration, such traits may include a birthmark, a particular outline for one or more facial components such as the eyes or nose, and/or a curvature in the lips. Still another situational dependency may comprise information repetition with respect to the presented document, such that, when examined against the Data Stores 20, it is learned that a presenter repeatedly attempts to use a same and incorrect PII in connection with a selfie and/or headshot on the presented document. In these regards, it will be understood that, given the creativity of fraudsters in an increasingly complex society, the above are merely exemplary of one or more techniques that a presenter may use to skirt the identification requirements of a requester with respect to either a selfie or a presented document.

Perhaps more difficult to manipulate, however, there exists yet another situational dependency which is tied to the overall process of the selfie capture. Simply, such dependency is defined by the device which is implemented in photographing the presenter. As such, embodiments herein contemplate examination of all associated data of the device implemented to capture the selfie, which may be evidenced from data extracted in accordance with the electronic transfer of the selfie from the requester to the IVE 10. Such data may include any and all identifying information for the device, e.g., metadata associated with the selfie capture and/or the MAC or Wi-Fi address of the portable device which was used for the selfie capture. In this way, the SD 24 may invoke such a dependency in a search of the Data Stores 20 to correlate previous selfie data from a same device which had been known to have been involved in fraudulent transactions.

As mentioned above, IVE 10 further defines an Identity Verification Predictor or IVP 26. IVP 26 may be specifically configured to receive and algorithmically determine the authentication result as a quantitative measure of the information obtained from each of the IV 22 and the SD 24 and which is, optionally, supported and defined by included, one or more established reason codes for the measure. In other words, the measure may be expressed as a probability for whether the transaction involving the presented document and/or the selfie is fraudulent. The expressed probability may be explained by one or more rationales as to why the probability is as it is. The probability may range from 0 to 100 percent and be expressed in decimal form, such that with increasing magnitude, the likelihood that the transaction involving the presented document and/or the selfie is fraudulent increases. In contrast, exemplary reason codes explaining a non-optimal probability may include apparent age discrepancy, prior fraudulent presenter, non-live selfie, physical forgery of the presented document, absence of document image liveness, and discordant match between the document headshot and the selfie. As will be understood, one or more of the reason codes may represent a respective reason as to why the probability should be increased. One or more of the reasons underlying a respective reason code may, as is discussed below, be associated with a corresponding, predetermined weighting. That is, a representative probability may be increased by as much as 75% if it is determined that the presented document indicates a physical forgery thereof.

IVP 26 may be implemented as a machine learning model. A "machine learning model" or "model" as used herein, refers to a construct that is trained using training data to make predictions or provide probabilities for new data items, whether or not the new data items were included in the training data. For example, training data for supervised learning can include positive and negative items with various parameters and an assigned classification. The machine learning model can be trained with supervised learning, where the training data includes individual instances of the IV 22 and SD 24 data matched to, for example, data of Data Stores 20 as input, which is then paired with a desired output, such as an indication as to whether a transaction involving a presented document and/or selfie ought to be assigned a given probability that it is fraudulent. A representation of the matching between the IV 22 and SD 24 data and the data of the Data Stores 20 can be provided to the model. Output from the model can be compared to the desired output for that potential transaction and, based on the comparison, the model can be modified, such as by changing weights between nodes of the neural network or parameters of the functions used at each node in the neural network (e.g., applying a loss function). After applying each of the pairings of the inputs and the desired outputs in the training data and modifying the model in this manner, the model is trained to evaluate new instances of whether a particular transaction involving a presented document and/or selfie is authentic. A new data item can have parameters that a model can use to assign a classification to the new data item. As another example, a model can be a probability distribution resulting from the analysis of training data, such as a likelihood of an input matching a conclusion, given a particular input, based on an analysis of a large corpus of inputs with corresponding correct conclusions. Examples of models include: neural networks (traditional, deeps, convolution neural network (CSS), recurrent neural network (RNN)), support vector machines, decision trees, decision tree forests, Parzen windows, Bayes, clustering, reinforcement learning, probability distributions, decision trees, and others. Models can be configured for various situations, data types, sources, and output formats.

In particular, IVP 26 may convert output of IV 22 and SD 24 and data of the Data Stores 20 to machine learning (ML) input therefor as training data for the IVP 26. The training data can initially comprise known comparisons and evaluations for a presented document, selfie, and headshot as compiled from, for instance, Data Stores 20, and for a multitude of presenters. The training data can thus be defined by pairing determinations as derived from the Data Stores 20 as to whether transactions involving the data of IV 22 and SD 24 were authentic or fraudulent. IVP 26 can convert the output of IV 22 and SD 24 and data of Data Stores 20 into a machine learning model input with respect to the evaluation data discussed herein. Data items thereof can be entered in a sparse vector and paired with predetermined fraud weightings (e.g., defining a weight for how much that data is likely to be associated as fraudulent activity). As discussed above, these weights can be user defined or inferred from the data elements (e.g., how often they show up, which sources they came from, etc.) The vector slots of the sparse vector can correspond to types of data that can be among the IV 22 and SD 24 data, and the values are filled in correspondingly. For example, when the IV 22 and/or SD 24 data indicate fraudulent selfie and/or headshot use, the value in the sparse vector corresponding to the same will be set to true and be paired with a predetermined fraudulent weighting. IVP 26 may then be continually retrained according to feedback received from a requester as to whether a particular transaction was or was not authentic. The feedback can comprise, with respect to a subject transaction, each of the Document Expression of a presented document and/or any selfie offered by the presenter when attempting the subject transaction, as well as the requestor's final determination as to whether the subject transaction was authentic.

In referring to FIG. 2, there is shown the groupings of information that may be collected and analyzed as between the IV 22 and the SD 24. More specifically, the IV 22 may process, for a received selfie and a presented document, each of an imaged Document Expression of the presented document, PII Verification for the presenter of the presented document, whereas the PII may be extracted by the PII Extractor 30 of the IV 22, and Biometrics for the presented document and/or selfie. Alongside each of the above, the IV 22 may further examine the aforementioned images to evaluate certain predetermined features, as discussed above in relation to the assessments that may be undertaken by the Predetermined Features Analyzer 34. SD 24 may process the various situational dependencies discussed above through appropriate algorithms trained to detect, for instance, prior use of a device that is known to be fraudulent wherein such knowledge may be gleaned, based on cross-checking, for example, the device Wi-Fi address, IMEI (International Mobile Equipment Identity), and sim card identity with information in the Data Stores 20.

As discussed, IV 22 may process, according to the Document Analyzer 28, the image of the presented document, i.e., the Document Expression, to evaluate the authenticity thereof. In doing so, the IV 22 may examine the propriety of one or more of embeddings, such as that of security features including patterning and a watermark, microprint (e.g., font and sizing), placement, sizing, and spacing of PII, and material construction (each being measured for compliance against an official, known standard for such aspects of the presented document, as applicable and provided, for example, by an appropriate governmental agency). The IV 22 may also assess, as against a known standard, the propriety, i.e., proper presentation and placement of encoded data provided as, for example, a barcode on a DL or a machine readable zone (MRZ) code on a passport. The assessment may further examine whether PII contained by the document, e.g., as printed thereon, matches that which is represented by the barcode or MRZ code. For example, the contained PII may be perceptible by the human eye while the encoded PII must be processed by a machine. The IV 22 may further analyze the Document Expression to determine, for example, placement of the presenter's headshot based on an algorithm trained to detect the headshot and render embeddings thereof, i.e., a mathematical representation of the headshot. In this latter instance, the representation may be assessed by the IV 22 to determine, as against data in the Data Stores 20 representing similar embeddings correlated to respective PII therefor, whether the headshot in the presented document is, itself, authentic. In an embodiment, various information based on the foregoing may be evaluated through optical character recognition so as to otherwise confirm matching of information defined by the Document Expression of the presented document. For example, information represented by encoding thereof may be correlated to that which appears in character form.

As part of processing the Document Expression of the presented document, the IV 22 may further extract PII for the presenter, according to the PII Extractor 30. In doing so, the IV 22 may coordinate with Data Stores 20 to execute a cross-check for the extracted PII so as to search for information defined by the PII among data in the Data Stores 20. That is, the IV 22 may seek to obtain a match between the extracted PII and the stored data. The matching may be implemented according to a categorical query, e.g., by name, DOB, etc. The stored data may be that which is procured according to a requester ID regime corresponding to a Know Your Customer (KYC) framework as is discussed and implemented in commonly owned U.S. Patent No. 10,956,916, entitled, "Self Learning Machine Learning Pipeline For Enabling Identity Verification," the entirety of which is hereby incorporated by reference. Additionally, the IV 22 may further execute one or more instances of searching for, as regards the presenter, ID presentation frequency. That is, the IV 22 may evaluate a correlation of a magnitude of prior fraudulent ID misrepresentations, e.g., PII, selfie, and/or headshot, by the presenter to whether the instant presentation of the present document is fraudulent. For example, the IV 22 may determine that a portion of the authentication result ought to reflect an increased probability for fraud based on a known set of fraudulent PII and/or face imaging, whether from a selfie or a headshot, since such data has continued to reappear within a predetermined timeframe.

In still referring to FIG. 2, the IV 22 may analyze various biometrics of the selfie itself and/or the headshot, according to the Biometric Analyzer 32, and use, as applicable, various ones of the biometrics to determine authenticity of the presented document.

In these regards, the IV 22 may undertake determinations as to whether the selfie is an actual representation of the presenter, as purported. In doing so, the liveness, i.e., whether the selfie was that of the presenter or of a picture or other representation of the presenter, may be analyzed according to known techniques, including, for example, texture analysis, light distribution analysis, edge detection, and 3D reconstruction. Similarly, the document headshot in the presented document may also be examined by the Document Analyzer 28 in a same manner as the selfie to determine whether, for instance, the headshot was a live capture, in contrast to, say, a paper or screen capture. Further, the selfie may be examined to determine whether the image presented in the selfie has been "spoofed," such that the presented image is a non-live depiction, e.g., an imaged mask. As will be understood, spoofed images may be detected based on known texture and expression analyses.

The IV 22 may also employ facial recognition and capture with respect to the selfie to determine, as against information of the Data Stores 20, for example, whether the presenter's image in the selfie has been associated with past instances of fraudulent activity. This way, the selfie inherently provides a basis by which to determine the above-discussed authentication result, such that detection of numerous instances of associated fraudulent activity would increase a magnitude of the authentication result and cause the same to be accompanied by a reason code indicative of the prior activity.

Still further, the IV 22 may be configured to compare the selfie to that of the headshot ordinarily appearing in the exemplary DL or passport. To do so, facial embedding, as described above, may be employed as to both the selfie and the headshot such that their relative comparison may be determinative of a match for the presenter. Alternatively, comparisons for the selfie and/or the headshot may be made against embeddings included in one or more of the Data Stores 20. In particular, the IV 22 may execute a predetermined algorithm to receive and analyze one or more "patches" or sections of the images by which to mathematically represent constructions of the faces represented by the selfie and headshot images. Thus, based on the relative constructions and comparisons therebetween, a conclusion may be drawn by the IV 22 as to whether a match exists between the selfie and the headshot images.

Additionally, the IV 22 may, for instance, evaluate whether an estimated age of the selfie accurately corresponds to that which is reflected in the presented document based on DOB. To do so, the IV 22 may employ a predetermined mathematical modeling which assesses, based on the selfie, or a portion thereof, a predicted age of the presenter at the time the selfie was taken. The prediction may be formulated according to the aforementioned mathematical constructions discussed above with respect to a selfie and headshot comparison whereby portions of the constructions may be assigned predetermined age values whereby these values may, for example, be averaged to arrive at the predicted age. With this, the IV 22 may undertake a comparison between the prediction and the age calculated based on the DOB as contained in the presented document. Relative to a predetermined threshold, i.e., age gap, a predetermined degree of risk may be assigned as a portion of the authentication result in the instance in which the differential in age between the predicted and actual ages exceeds the threshold. For example, when determining whether an identity as presented in a selfie is authentic, IVP 26 may take as machine learning inputs each of the predicted age, a degree of uncertainty, i.e., age gap, and an age as determined according to DOB as provided by the presented document. The inputs may, for example, take the form of the following:
estimated selfie_ age: 25;
selfie_age_estimation_uncertainty: 4; and
age_from_document: 56.

Based on the implementation of the IVP 26 according to the training therefore as discussed above, the IVP may then generate an authentication result (based on age prediction for selfie): of .95. That is, the IVP may, based on the above inputs and training as to all of the data that may be evaluated according to IV 22, determine the reflected high likelihood, i.e., probability, that a given transaction involving the selfie is fraudulent.

In view of the above, the IVP 26 may receive each of the data relating to the Document Expression, PII Verification, Biometrics, and Situational Dependencies, and designate the same as factors for calculation of the authentication result, including applicable reason codes. It is to be understood that such factors may be exemplary of the data which may be collected by the IV 22 and SD 24, and may define an evaluation of whether a subject transaction involving a presented document and/or selfie is fraudulent. Also, and as discussed, a predetermined weighting may be assigned, throughout training of the IVP 26, to one or more of the data by which assessments for the risk of fraudulent engagement in the subject transaction may be formulated according to the predetermined algorithm executed by the IVP 26. In this way, machine learning for the risk may be continually tuned based on feedback received from one or more of requesters, e.g., in a case in which the presenter has attempted fraudulent transactions with multiple ones of requesters, based on a true outcome as to whether the presented document was accepted by one or more requesters as being authentic. This is the case as one or more of the data may be designated to correlate to a continually evolving determination of a respective risk value, based on operation and findings of the IV 22 and the SD 24, and the feedback. For example, the respective risk value may be tuned according to a percentage amount commensurate with a number of times the presenter has been known to have defrauded one or more of the requesters. Herein, the terms, "tune," and "tuned," shall mean, as applicable, maintain/maintained, change/changed, and revise/revised in accordance with processing of the data of IV 22 and SD 24 and IVP 26.

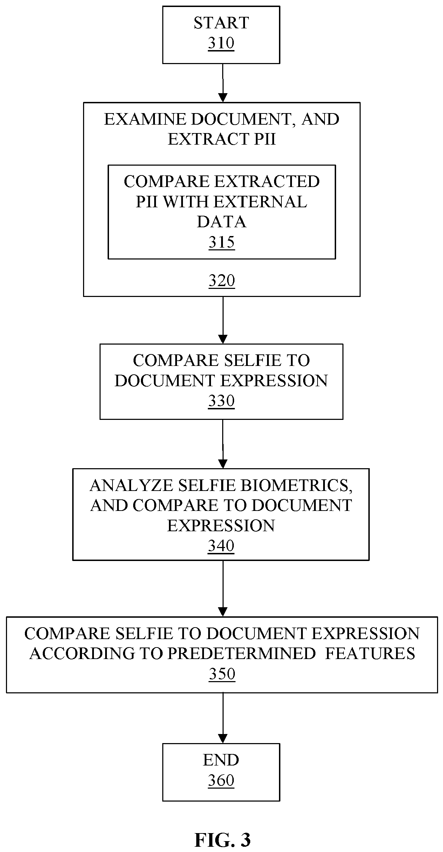

In referring to FIG. 3, there is shown a manner of operation of the IV 22 in connection with receipt of a Document Expression for a presented document and a selfie, whereby one or more processes defining the operation may occur in sequence or simultaneously. Therein, the process starts at 310, and proceeds to 320 whereat the IV 22 undertakes examination of the presented document, and particularly its Document Expression, as discussed above. Integral to the examination is the extraction of the PII as defined by the Document Expression, and from which the IV 22 may, optionally, further execute, at 315, a comparison of the extracted PII with data according to, for example, data of Data Stores 20 so as to execute the above-discussed cross-check, KYC, and ID presentation frequency inquiries. At 330, the IV 22 executes a comparison of the selfie to that of the Document Expression to, for instance, determine the referenced age detection and verification. At 340, the IV 22 executes a comparison of biometrics, as derived from the selfie and/or the Document Expression, to determine such features as liveness/spoofing and execute the referenced facial list matching and selfie-headshot comparison. Alternatively, IV 22 may evaluate the selfie alone for such features as liveness/spoofing. At 350, and prior to ending an iteration of FIG. 3 as to a given presenter or for multiple presenters, the IV 22 executes a comparison of the selfie to that of the Document Expression according to one or more predetermined features.

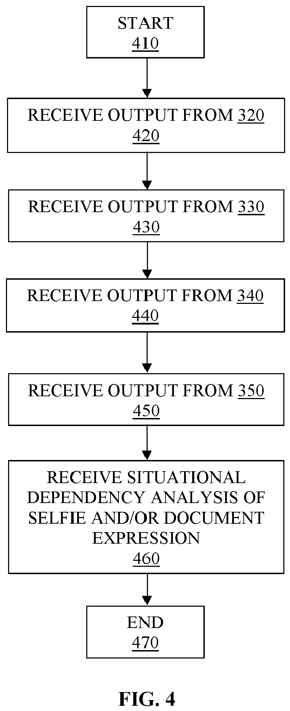

In referring to FIG. 4, there is shown an inflow of data to the IVP 26 starting at 410 and respectively corresponding at 420, 430, 440, and 450 to each steps 320, 330, 340, and 350 of FIG. 3. Prior to concluding the inflow at 470, the IVP 26 may receive , at 460, analysis of the variously discussed situational dependencies for its consideration when determining the authentication result. In these regards, it is to be understood that IVP 26 may receive one or more of the data 420, 430, 440, 450, and 460 when determining an authentication result for a subject transaction.

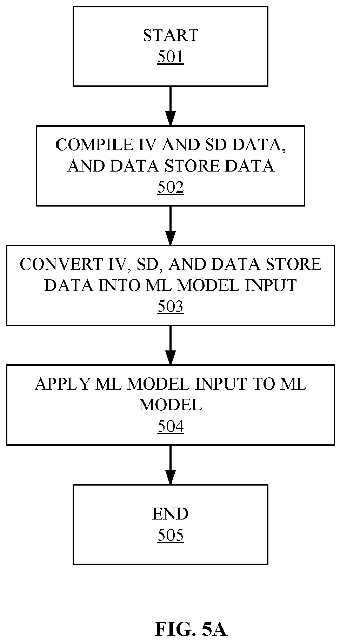

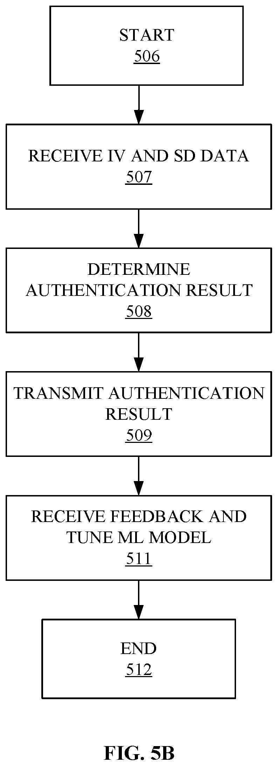

In referring to FIGS. 5A and 5B, there are shown respective processes for training and applying the IVP 26 when obtaining an authentication result, as discussed herein.

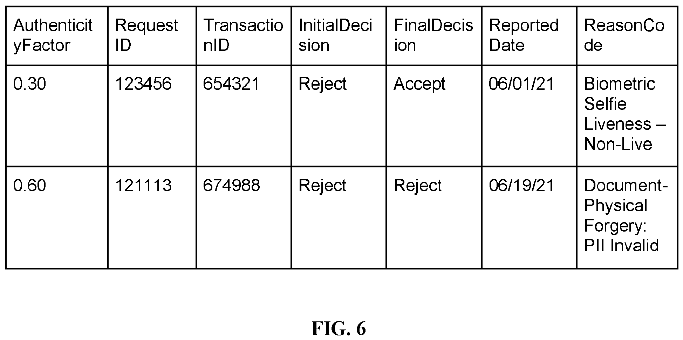

With reference to FIG. 5A, the process begins at 501, and proceeds to 502 whereat IV 22, SD 24, and Data Store 20 data are compiled. At 503, such data are converted to ML input data as training data, as described above. At 504, the input data are applied to the ML model implemented herein as IVP 26, whereat the process ends at 505 for a given iteration. With reference to FIG. 5B, the process begins at 506, and proceeds to 507 whereat IV 22 data and SD 24 data are received by the IVP 26. At 508, the IVP 26 determines an authentication result for the presented document and/or selfie for which IV 22 and SD 24 data were derived in connection with a subject transaction. At 509, the IVP 26 transmits the authentication result to the requester for the subject transaction. At 511, the IVP 26 receives feedback from the requester according to the herein described transaction ID of FIG. 6, and tunes the ML model thereof according to the feedback, prior to ending operations for a given iteration at 512.

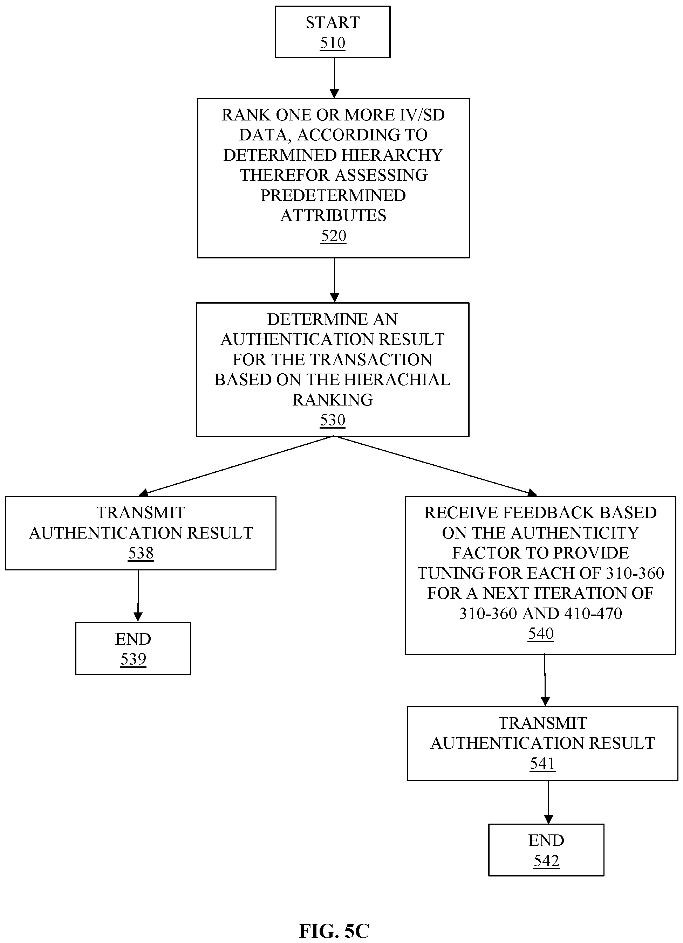

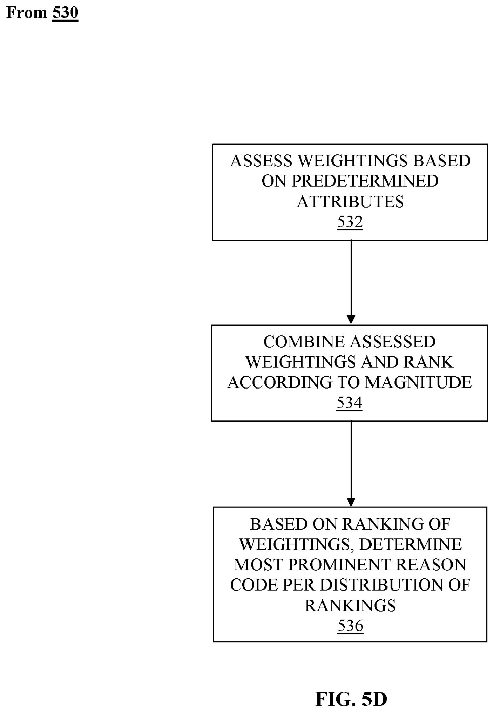

In referring to FIGS. 5C and 5D, there is shown a process conducted by the IVP 26 for determining the authentication result, in accordance with the above-discussed training and application of IVP 26. The process begins at 510 and proceeds to 520 whereat the IVP 26 may receive and rank one or more of the data received through the inflow of FIG. 4 according to a weighting therefor, as applied and determined during training of the IVP 26 for matching data. The weighting may, optionally, reflect a level or degree of fraud risk as to a specific one of the data or a combination thereof. In other words, the data may be considered individually or in combination as risk factors for fraudulent presentation of a presented document and/or selfie. Once recognition of the received data is complete, the IVP 26 further proceeds to, as at 530 and 532, determine the authentication result based on a predetermined algorithm assessing the rankings in terms of various predetermined attributes including, for instance, spread and proximity, similarity, scoring as to correlation, and scoring as to confidence, to name a few. Through this assessment, the predetermined algorithm may then, as at 534, combine the assessed rankings in a predetermined manner, e.g., based on a hierarchy in magnitude. In determining the hierarchy, the IVP 26 may assess whether a given ranking for a particular parameter ought to be adjusted based on a ranking for another parameter. For instance, if a ranking according to a fraudulent headshot is lower than a ranking according to fraudulent PII, then the ranking for the fraudulent headshot may be increased so as to equate to the PII ranking. This may be the case since IVP 26 may derive, from an analysis of these, and perhaps other parameters for the given Document Expression, that it was more likely than not that, because of the interrelationship among a headshot and PII as learned from training, the originally accorded ranking was insufficient. The rankings may then, as at 536 be normally distributed to identify the most prominent reason code which may be assigned according to its respectively determined probability. Thereafter, the IVP 26 may issue, i.e., transmit, as at 538, and prior to ending processing for an initial iteration at 539, a respective first authentication result for the given transaction for which verification and authentication analysis had been requested. In some embodiments, the IVP 26 may further transmit reason codes having determined probabilities of lesser magnitude and ranking, i.e., less prominent reason codes.

Based on a given iteration of 520-530, the IVP 26 may be configured to, at 540 and prior to or after concluding machine learning for the initial iteration, receive feedback from a particular requester which had made the authenticity request for which the authentication result was issued. With this feedback reflecting an actual outcome as to the authenticity of the presented document, as determined by the requester, the IVP 26 may be retrained by, for example, tuning, as part of 540, a currently assigned weighting so as to refine one or more second authentication results for subsequent iterations as to a same or different requester. That is, one or more of the data, as discussed herein, may be differently weighted based on the feedback. It is to be understood that feedback from one requester may be used to refine an authentication result to be issued to another requester, say, for example, as at 541 prior to ending processing for the subject subsequent iteration as at 542. Exemplary feedback may be illustrated with reference to FIG. 6, in which there is shown, for a given transaction having an application ID and transaction ID, an initial decision as determined by the IVE 10 with respect to whether the presented document should or should not be accepted (from among options as to whether to accept the presented document, reject the presented document, or resubmit the request for verification). Alongside, there is shown a final decision outcome reflecting whether the transaction was permitted to proceed by a respective requester on the shown report date. Through use of the transaction ID, the final decision may be tied to the data underlying the originally submitted request for verification so as to enable the IVE 10 to develop training sets for another iteration of requests transmitted by the same or a different requester. Development of such training sets may be based on a tuning of, for example, a weighting previously assigned for one or more parameters explained by a reason code included in the feedback. For instance, as may be understood from FIG. 6, IVE 10 may benefit from processing of feedback in the form of the final decision reflecting acceptance of the presented document when, in fact, an initial IVE 10 decision indicated that the presented document ought to have been rejected. Also shown in FIG. 6 is an exemplary reason code which is, optionally, to be included with the numerical representation as to the likelihood of the presented document being fraudulent. That is, the combination of the numerically expressed likelihood and the relevant one or more reason codes may define the relevant authentication result for the submitted request. In this case, the opposed initial and final decisions, as shown in FIG. 6, for example, may further inform whether to adjust the IVE's application of weightings to one or more of the reason codes which, in this case, was cited as "Biometric Selfie Liveness - Non-Live."

Table 1 below, based on the exemplary listing therein, further explains and/or expands upon reason codes already discussed herein.

**Table 1**

| Reason Code | Description |
|---|---|
| Physical Forgery/Counterfeit | Document or Security Factor Modification; Headshot modification/photoshop |
| Document Liveness | Non-live capture (paper or screen capture) |
| Selfie/Headshot Discordance | Non-match between headshot and selfie |

| Biometric Selfie Liveness | Non-live selfie |
|---|---|
| Data Extraction or Validation | OCR/Data discrepancy; Barcode/MRZ fail to match remaining document PII |

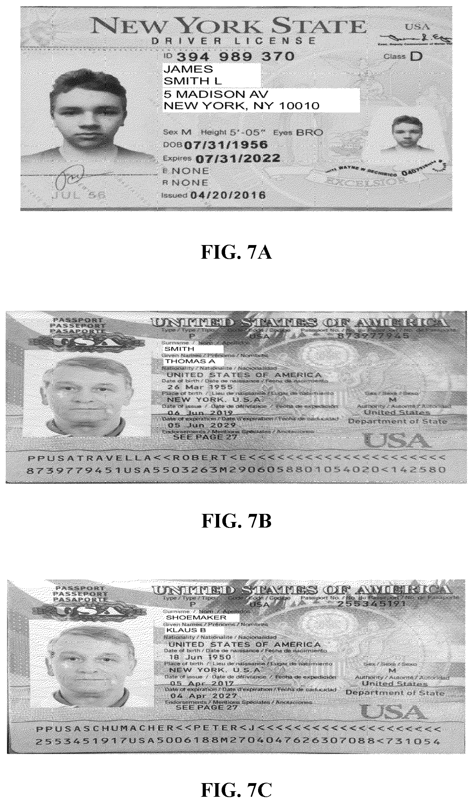

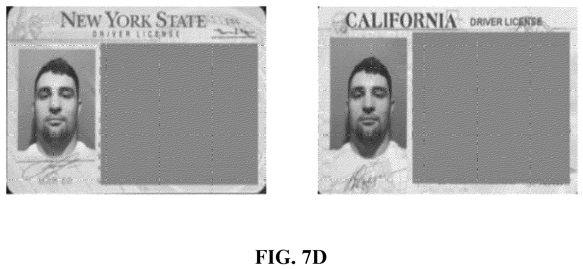

In referring to FIGS. 7A-7D, there are shown various example analyses as conducted by the IV 22 in preparation of data to be provided to the IVP 26. For example, and relative to FIG. 7A, biometrics analysis detected a sufficiently large discrepancy among an estimated age of the depicted individual and the DOB calculated according to the reflected PII contained on the presented DL. As such, IVP 26 may be configured to assign a relatively large fraud weighting to the discrepancy, thus causing the depicted individual to be flagged as presenting a high fraud risk, which may then be communicated to a requester as a low magnitude authentication result. FIGS. 7B-7C demonstrate a detected risk factor based on the absence of correlation among the Document Expressions of two different passports. That is, it may be clearly recognized that a same headshot is attempted to be associated with differing Pll, and particularly the name of the presenter. FIG. 7D demonstrates an example of operation of the SD 24 in determining the situational dependency of intrinsic fraud, through inspection of certain data as contained in one or more Data Stores 20, and in this case, one or more thereof that provides for a database of presenters having a predetermined number of fraudulent presentations of or associations to fraudulent activity. For instance, the presenter depicted in the New York and California DLs may be the subject of various prior fraudulent transaction attempts which have been recorded, but has yet again attempted to use a selfie to portray a valid DL multiple times, perhaps for multiple, intended fraudulent purposes.

Thus, as may be appreciated from the above, embodiments disclosed herein deliver a system and method of optimizing the verification of a document and/or selfie which have been presented in connection with authentication required to participate in a given transaction. In particular, such system and method enable the determination of an authenticity of the transaction based on a characterization therefor comprising a quantitative measure as to a likelihood that the presented document and/or selfie is authentic. That is, the quantitative measure, discussed herein as an authentication result, may be evaluated based on predetermined and/or predictive weightings associated with findings from any of the presented document itself and/or a selfie. As such, the authentication result is predictive of the likelihood of fraud being attempted in connection with presentation of the presented document, whereas the weightings may be initialized as predetermined weightings assigned to various herein discussed aspects of the presented document and/or the selfie. Through feedback received from a requesting party desirous of learning the prediction, such predetermined weightings and machine learning operable thereon may be continually tuned for one or more subsequent iterations of requests for the same presented document or another document, and as submitted by the same requesting party or another thereof.

In these ways, it may be understood that at least the development of subsequent authentication results for a same or different presented document, based on feedback for a first authentication result, provides a practical application of fraud prevention based on examinations of and comparisons between a particular and given set of images for an individual presenter, whether from a Document Expression including a headshot, a selfie or any combination of the Document Expression, headshot, and selfie, as compared to known images therefor. That is, examinations and comparisons afford such a practical application of organization of data and comparison thereof, whereas embodiments encompassing such comparison, as provided by constituent steps and components enabling the same, are directed to a predictive capability for fraud detection which is automated through machine learnings of various fraud indicators/indications as between the selected images. In these ways, for example, such predictive capability can assess one or more parameters of a Document Expression, including its headshot, and/or a selfie to evaluate whether these one or more parameters ought to affect evaluation of other parameters. For example, presentation of erroneous or fraudulent PII as to a Document Expression may be deemed evidence of an erroneous or fraudulent presentation of a headshot in a case, for instance, in which a requester requires presentation of a DL without first having seen the presenter or otherwise required a selfie to verify the Document Expression headshot.

One or more embodiments herein may be configured to seamlessly accept and transmit data in accordance with one or more operating systems, including Android and iOS, and any derivation thereof intended to process one or more adaptable file formats.

Accordingly, there is provided herein various manner for detecting, interpreting, and predicting risk of fraud in connection with attempts to verify authenticity of a transaction in connection with presentation of a presented document as discussed herein and/or a selfie. As discussed, the detecting, interpreting, and predicting are adaptable to varying methods of communication and circumstances in order to minimize successful occurrences of trickery which may be attempted by a presenter when attempting to satisfy ID requirements.

While particular embodiments of the present invention have been shown and described, it will be obvious to those skilled in the art that, based upon the teachings herein, changes and modifications may be made without departing from this invention and its broader aspects and, therefore, the appended claims are to encompass within their scope all such changes and modifications as are within the true spirit and scope of this invention. Furthermore, it is to be understood that the invention is solely defined by the appended claims.

## Claims

1. A method of verifying an identity of an individual for authenticating a transaction, the method comprising:
receiving, as offered proof of identity of the individual for the transaction, a selfie of the individual comprising one or more elements and/or a document expression for a presented document of the individual comprising one or more elements, the document expression comprising an image of the presented document which comprises at least a headshot of the individual and identity information of the individual comprising personally identifiable information (PII) comprising at least a name and a date of birth (DOB);
determining, by an identity verifier (IV), an evaluation of fraudulent usage for (a) the selfie of the individual and/or (b) the document expression by at least cross-checking the document expression against a known standard for the presented document to evaluate compliance with the standard; and
identifying, based on the evaluation, an authentication result for the transaction comprising a probability that the transaction is fraudulent, by:
creating a first training set comprising one or more of (i) training selfies of individuals and (ii) training document expressions, in which elements comprising a training selfie and a training document expression are each respectively initially paired with a predetermined fraud weighting,
wherein each predetermined fraud weighting indicates a respective probability of fraud in connection with use of the selfie of the individual or the document expression;
converting the evaluation into input for a machine learning model comprising an identity verification predictor (IVP) trained on the first training set;
applying the input to the IVP and, obtaining, as output from the IVP, the authentication result for the transaction,
wherein the authentication result is, in response to comparison by the IVP of the first training set to the one or more elements of the selfie of the individual and/or the one or more elements of the document expression, based on first rankings, for first fraud weightings, newly assigned by the IVP to the compared one or more elements of the selfie of the individual and/or the document expression, wherein the first rankings comprise a hierarchy for the newly assigned first fraud weightings;
creating a second training set comprising the first training set and one or more elements, corresponding to the selfie of the individual and/or the document expression, identified by the IVP as being incorrectly ranked after the applying of the IVP trained on the first training set; and
updating the IVP, according to training on the second training set, to obtain corresponding newly assigned second fraud rankings, for second fraud weightings, in order to verify the authentication result for the one or more elements of the selfie of the individual and/or the one or more elements of the document expression,
wherein the first and second rankings respectively compensate for inverse correlation among the newly assigned first and second fraud weightings and are normally distributed, by the IVP, to identify the authentication result.

2. The method of claim 1,
wherein the evaluation of the selfie comprises one or more of (a) determining liveness and/or spoofing thereof, (b) determining an age thereof, (c) determining whether the depiction for the selfie image appears in one or more data stores comprising images for individuals associated with fraudulent activity, or (d) any combination thereof.

3. The method of claim 1,
wherein the known standard for the presented document comprises one or more of (a) embeddings, (b) placement, sizing, and/or spacing for the PII, (c) presentation of encoded data comprising a machine-readable version of the PII, or (d) any combination thereof.

4. The method of claim 1,
wherein the evaluation of the presented document further comprises cross-checking the PII with one or more data stores to verify the PII and/or determine a frequency of presentation as to a misrepresentation of the PII, and/or a comparison between a mathematical representation of the headshot with mathematical representations of headshots correlated to the PII as included in one or more data stores.

5. The method of claim 1,
wherein the evaluation further comprises a comparison between (a) the selfie and the headshot to determine matching therebetween and/or (b) a comparison of an estimated age of the selfie and the age of the individual as determined by the DOB.

6. The method of claim 1,
wherein the evaluation further comprises comparing one or more features of the selfie and/or the headshot to respective model scores for the one or more features; or
wherein the evaluation further comprises determining a level of one or more photographic distortions for the selfie and/or the headshot.

7. The method of claim 1,
wherein the evaluation further comprises determining, based on a comparison with headshots and corresponding PII as included in one or more data stores, (a) the presence or absence of physical traits of the individual as presented on the selfie and/or the headshot and/or (b) incorrect PII usage by the individual in connection with the selfie and/or the headshot.

8. The method of claim 1,
wherein the evaluation further comprises obtaining identifying information of a device used to capture the selfie, and determining, based on data of one or more data stores, whether the identifying information has been previously used in connection with fraudulent use of the selfie.

9. A computing system for verifying an identity of an individual to authenticate a transaction, the computing system comprising:
one or more processors;
one or more memories storing instructions that, when executed by the one or
more processors, cause the computing system to perform a process comprising:
receiving, as offered proof of identity of the individual for the transaction, a selfie of the individual comprising one or more elements and/or a document expression for a presented document of the individual comprising one or more elements, the document expression comprising an image of the presented document which comprises at least a headshot of the individual and identity information of the individual comprising personally identifiable information (PII) comprising at least a name and a date of birth (DOB);
determining, by an identity verifier (IV), an evaluation of fraudulent usage for (a) the selfie of the individual and/or (b) the document expression by at least cross-checking the document expression against a known standard for the presented document to evaluate compliance with the standard; and
identifying, based on the evaluation, an authentication result for the transaction comprising a probability that the transaction is fraudulent, by:
creating a first training set comprising one or more of (i) training selfies of individuals and (ii) training document expressions, in which elements comprising a training selfie and a training document expression are each respectively initially paired with a predetermined fraud weighting,
wherein each predetermined fraud weighting indicates a respective probability of fraud in connection with use of the selfie of the individual or the document expression;
converting the evaluation into input for a machine learning model comprising an identity verification predictor (IVP) trained on the first training set;
applying the input to the IVP and, obtaining, as output from the IVP, the authentication result for the transaction,
wherein the authentication result is, in response to comparison by the IVP of the first training set to the one or more elements of the selfie of the individual and/or the one or more elements of the document expression, based on first rankings, for first fraud weightings, newly assigned by the IVP to the compared one or more elements of the selfie of the individual and/or the document expression, wherein the first rankings comprise a hierarchy for the newly assigned first fraud weightings;
creating a second training set comprising the first training set and one or more elements, corresponding to the selfie of the individual and/or the document expression, identified by the IVP as being incorrectly ranked after the applying of the IVP trained on the first training set; and
updating the IVP, according to training on the second training set, to obtain corresponding newly assigned second fraud rankings, for second fraud weightings, in order to verify the authentication result for the one or more elements of the selfie of the individual and/or the one or more elements of the document expression,
wherein the first and second rankings respectively compensate for inverse correlation among the newly assigned first and second fraud weightings and are normally distributed, by the IVP, to identify the authentication result.

10. The computing system of claim 9,
wherein the evaluation of the selfie comprises one or more of (a) determining liveness and/or spoofing thereof, (b) determining an age thereof, (c) determining whether the depiction for the selfie image appears in one or more data stores comprising images for individuals associated with fraudulent activity, or (d) any combination thereof.

11. The computing system of claim 9,
wherein the known standard for the presented document comprises one or more of (a) embeddings, (b) placement, sizing, and/or spacing for the PII, (c) presentation of encoded data comprising a machine-readable version of the PII, or (d) any combination thereof.

12. The computing system of claim 9,
wherein the evaluation of the presented document further comprises cross-checking the PII with one or more data stores to verify the PII and/or determine a frequency of presentation as to a misrepresentation of the PII, and/or a comparison between a mathematical representation of the headshot with mathematical representations of headshots correlated to the PII as included in one or more data stores.

13. The computing system of claim 9,
wherein the evaluation further comprises a comparison between (a) the selfie and the headshot to determine matching therebetween and/or (b) a comparison of an estimated age of the selfie and the age of the individual as determined by the DOB; or
wherein the evaluation further comprises comparing one or more features of the selfie and/or the headshot to respective model scores for the one or more features.

14. The computing system of claim 9,
wherein the evaluation further comprises determining a level of one or more photographic distortions for the selfie and/or the headshot; or
wherein the evaluation further comprises determining, based on a comparison with headshots and corresponding PII as included in one or more data stores, (a) the presence or absence of physical traits of the individual as presented on the selfie and/or the headshot and/or (b) incorrect PII usage by the individual in connection with the selfie and/or the headshot.

15. The computing system of claim 9,
wherein the evaluation further comprises obtaining identifying information of a device used to capture the selfie, and determining, based on data of one or more data stores, whether the identifying information has been previously used in connection with fraudulent use of the selfie.
